Europäisches Patentamt

**European Patent Office**

**Office européen des brevets**

(19)

(11) Numéro de publication : **0 454 565 A1**

# (12) DEMANDE DE BREVET EUROPEEN

(21) Numéro de dépôt : **91401069.9**

(22) Date de dépôt : **23.04.91**

(51) Int. Cl.$^5$ : **G01N 22/00**

(30) Priorité : **25.04.90 FR 9005265**

(43) Date de publication de la demande :
**30.10.91 Bulletin 91/44**

(84) Etats contractants désignés :
**BE CH DE ES GB IT LI NL SE**

(71) Demandeur : **AEROSPATIALE Société
Nationale Industrielle
37, Boulevard de Montmorency
F-75781 Paris Cédex 16 (FR)**

(72) Inventeur : **Lahitte, Pierre
No. 3 Lotissement des "Orchidées", Salaunes
F-33160 Saint Medard en Jalles (FR)**
Inventeur : **Prache, Brigitte
55, rue des Ayres, Immeuble 7
F-33000 Bordeaux (FR)**

(74) Mandataire : **Mongrédien, André et al
c/o SOCIETE DE PROTECTION DES
INVENTIONS 25, rue de Ponthieu
F-75008 Paris (FR)**

(54) **Cavité hyperfréquence adaptée à la mesure des caractéristiques électromagnétiques d'un matériau filiforme en défilement.**

(57)    Afin de mesurer des caractéristiques électromagnétiques d'un matériau filiforme en défilement, sans couper ce matériau et sans risque qu'une pollution liquide et/ou solide introduite par ce matériau ne vienne perturber les mesures, il est proposé une cavité hyperfréquence (10) dont la paroi (12) est traversée par deux orifices en vis-à-vis dans lesquels sont placées les deux parties ouvertes d'un dispositif de protection tubulaire démontable (26). La fente (24) permet d'introduire le matériau filiforme (F) dans la cavité. Le dispositif (26) isole le matériau filiforme de cette dernière et sa réalisation en deux parties permet de le mettre en place sans couper ledit matériau. Le remplacement du dispositif de protection (26) s'effectue sans arrêter les mesures et sans qu'aucune pollution ne puisse pénétrer dans la cavité.

FIG. 1

EP 0 454 565 A1

L'invention concerne une cavité hyperfréquence conçue pour être utilisée dans un dispositif industriel permettant de mesurer les caractéristiques électromagnétiques telles que les parties réelle et imaginaire de la permitivité ou de la perméabilité d'un matériau filiforme en défilement continu ou discontinu.

Une telle cavité peut notamment être utilisée, en association avec une source hyperfréquence qui en assure l'excitation, pour mesurer les caractéristiques électromagnétiques d'un matériau composite filiforme polluant tel qu'une mèche imprégnée d'une substance visqueuse. La mèche est alors constituée d'une multitude de fibres ou fibrilles en un matériau tel que le carbone, conducteur de l'électricité, imprégnées d'une résine à l'état pâteux ou prégélifié. La cavité selon l'invention peut toutefois être utilisée pour mesurer les caractéristiques électromagnétiques d'un matériau filiforme de nature différente, éventuellement non composite, non conducteur et/ou non polluant.

Comme l'illustre notamment le document FR-A-2 619 217, il est connu d'utiliser une cavité hyperfréquence, par exemple cylindrique fermée du type monomode, excitée selon un mode déterminé par une source hyperfréquence, pour déterminer une grandeur électromagnétique telle que la permitivité complexe d'un matériau filiforme défilant dans la cavité. Le matériau filiforme traverse alors la cavité par deux orifices en vis-à-vis ménagés dans sa paroi, de façon à se trouver dans une région de la cavité dans laquelle le champ magnétique ou électrique, suivant le matériau à tester, d'une onde stationnaire établie dans la cavité est maximum et pratiquement homogène.

Les caractéristiques électromagnétiques du matériau sont calculées en fonction de l'évolution de la courbe de résonance de la cavité. Cette courbe représente les variations de la puissance transmise ou de la puissance réfléchie en fonction de la fréquence de résonance, selon que la cavité comporte deux entrée-sortie de mesure électrique ou une seule, respectivement.

Dans le cas où le matériau filiforme est un matériau composite polluant, la cavité de mesure peut être polluée soit par des fibrilles conductrices de l'électricité produisant des court-circuits à l'intérieur de la cavité résonante, soit par un excès de résine venant perturber les étalonnages du système de mesure en s'écoulant dans la cavité. Dans les deux cas, le point de fonctionnement de la cavité, c'est-à-dire le sommet de la courbe de résonance, se trouve déplacé vers une fréquence et une puissance plus faibles par rapport au point de fonctionnement de la cavité en l'absence de toute pollution. Les mesures effectuées sont donc totalement faussées.

Par ailleurs, la cavité hyperfréquence décrite dans le document FR-A-2 619 217 est mal adaptée à une utilisation industrielle. En effet, il n'est pas possible d'introduire un matériau filiforme de grande longueur dans la cavité sans couper la mèche, ni d'assurer la maintenance du dispositif sans arrêter le fonctionnement du système de mesure.

Dans les documents FR-A-2 386 033 et EP-A-0 011 185, il est décrit une cavité hyperfréquence permettant de mesurer les caractéristiques électromagnétiques d'un échantillon qui doit être positionné avec précision dans la cavité. A cet effet, l'échantillon est placé dans un porte-échantillon cylindrique qui est mis en place dans un tube de guidage traversant la cavité. Ce tube de guidage coopère avec l'une des parois de la cavité par un système vis-écrou qui permet d'en assurer le positionnement longitudinal.

Cependant, l'agencement décrit dans ces documents n'est en aucun cas adapté à la réalisation de mesures sur un matériau filiforme en défilement. En particulier, il ne serait pas non plus possible avec une telle cavité d'effectuer des mesures sur un matériau filiforme ou d'effectuer des interventions de maintenance sur le dispositif sans couper le matériau et arrêter les mesures. De plus, dans le cas d'un matériau filiforme polluant, le remplacement du tube de guidage ne pourrait pas se faire sans souiller la cavité.

L'invention a précisément pour objet une cavité hyperfréquence dont la conception originale permet d'effectuer à l'échelle industrielle des mesures sur un matériau filiforme en défilement, même dans le cas où ce matériau est polluant, sans qu'il soit nécessaire à aucun moment de couper le matériau filiforme, sans qu'il soit nécessaire de stopper les mesures lors des opérations de maintenance et sans risque de pollution de la cavité, même lorsque ces opérations de maintenance sont effectuées.

Conformément à l'invention, ce résultat est obtenu au moyen d'une cavité hyperfréquence adaptée à la mesure des caractéristiques électromagnétiques d'un matériau filiforme en défilement, comprenant une paroi pourvue de deux orifices en vis-à-vis permettant le passage du matériau filiforme, caractérisée par le fait que la paroi est également traversée par une fente ouverte débouchant dans les deux orifices et dont la largeur autorise le passage du matériau filiforme, un dispositif de protection tubulaire démontable traversant la cavité entre lesdits orifices, ce dispositif de protection comprenant deux parties ouvertes aptes à être juxtaposées bord à bord autour du matériau filiforme.

Dans une cavité ainsi réalisée, la fente ouverte permet d'introduire latéralement le matériau filiforme dans les orifices, pour l'amener dans sa position de mesure, sans qu'il soit nécessaire de couper ce matériau. Le dispositif de protection tubulaire permet quant à lui de protéger l'intérieur de la cavité de toute pollution lorsque le matériau filiforme est un matériau polluant, et sa réalisation en deux parties ouvertes permet son montage et son démontage toujours sans qu'il soit nécessaire de couper le matériau filiforme.

De plus, le dispositif de protection tubulaire peut être introduit par l'un ou l'autre des deux orifices, de telle sorte que son remplacement est assuré par une simple poussée, le dispositif de remplacement éjectant le dispositif usagé, sans qu'aucune pollution ne puisse pénétrer, même à ce moment, dans la cavité.

Dans un mode de réalisation préféré de l'invention, chacune des parties ouvertes du dispositif de protection présente la forme d'un demi-cylindre de révolution.

Avantageusement, afin d'améliorer la protection de la cavité contre la pollution, les parties ouvertes du dispositif de protection comportent des bords latéraux complémentaires en forme de chicanes, aptes à être imbriqués les uns dans les autres.

Les parties ouvertes formant le dispositif de protection tubulaire peuvent être fixées sur l'une ou l'autre des parois de la cavité par des organes de fixation tels que des vis traversant des trous formés dans une bride de fixation équipant l'une des extrémités de cette partie ouverte.

Afin d'améliorer encore la protection de la cavité contre la contamination lors du remplacement des parties ouvertes du dispositif de protection tubulaire, chacune de ces parties comporte, à l'opposé de l'extrémité portant la bride de fixation, un bord d'extrémité en forme de chicane apte à être imbriqué dans un bord d'extrémité complémentaire d'une partie ouverte de remplacement introduite par glissement dans la cavité.

Un mode de réalisation préféré de l'invention va à présent être décrit, à titre d'exemple non limitatif, en se référant aux dessins annexés, dans lesquels :

– la figure 1 est une vue en perspective représentant une cavité hyperfréquence conçue, conformément à l'invention, pour effectuer des mesures sur un matériau filiforme en défilement ;

– la figure 2 est une vue en perspective représentant à plus grande échelle les deux parties d'un dispositif de protection tubulaire démontable équipant la cavité hyperfréquence de la figure 1 ;

– les figures 3A et 3B sont des vues en perspective représentant deux étapes successives des opérations permettant d'introduire un matériau filiforme dans la cavité hyperfréquence selon l'invention sans couper ce matériau filiforme ; et

– les figures 4A à 4C sont des vues en coupe partielle illustrant de façon très schématique le remplacement du dispositif de protection tubulaire démontable illustré sur la figure 2 sans interrompre le défilement du matériau filiforme dans la cavité et sans risque d'introduction de pollution dans cette dernière.

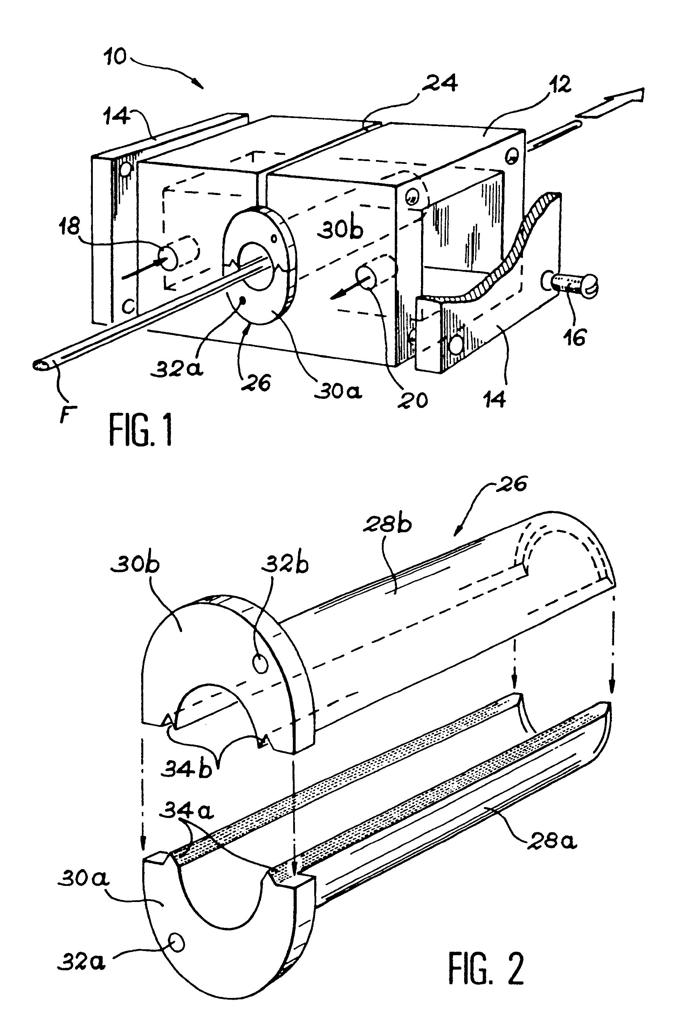

Sur la figure 1, la référence 10 désigne de façon générale une cavité hyperfréquence délimitée par une paroi 12 réalisée, par exemple, en Invar. La forme ainsi que les dimensions de cette cavité sont adaptées aux mesures particulières que l'on désire réaliser, selon les connaissances générales de l'homme du métier. La représentation schématique de la figure 1 ne doit donc pas être considérée comme limitative de ce point de vue.

Dans l'exemple de réalisation représenté, la cavité hyperfréquence est une portion de guide d'onde de section rectangulaire, fermée à ses extrémités par deux court-circuits 14, également réalisés en Invar et fixés sur la paroi 12 par exemple à l'aide de vis 16.

Dans l'exemple représenté, la paroi 12 est traversée sur l'une de ses faces, à proximité de chacune des parois rapportées 14, par une entrée 18 et par une sortie 20. L'entrée 18 est destinée à être couplée à une source micro-onde (non représentée) et la sortie 20 à un détecteur (non représenté) par des câbles de transmission (non représentés).

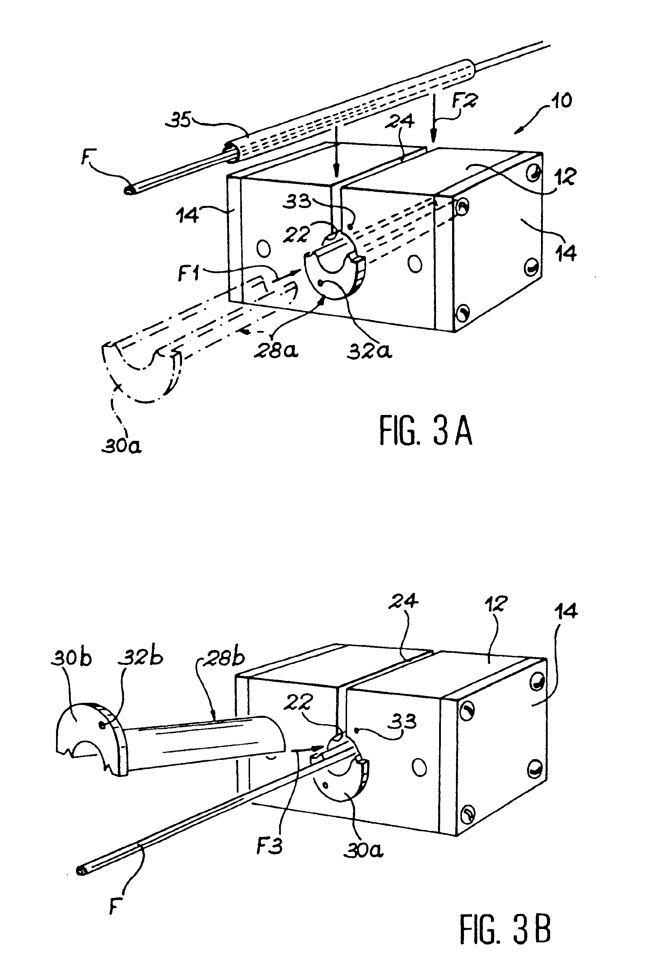

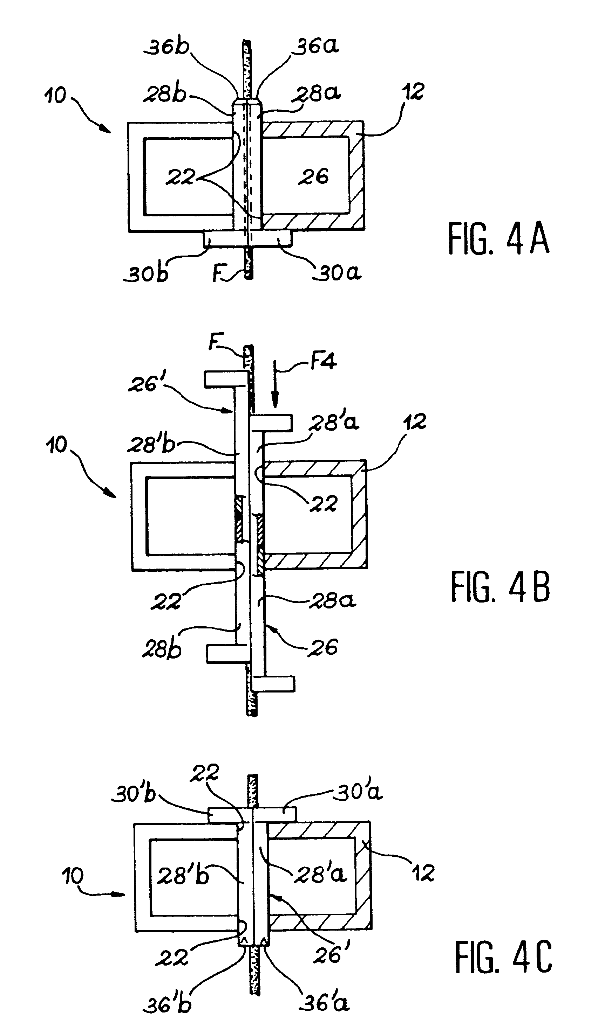

Afin de permettre le passage du matériau filiforme F sur lequel on désire effectuer des mesures, deux des faces parallèles de la paroi 12 de la cavité, incluant la face dans laquelle sont formées l'entrée 18 et la sortie 20, comportent en leur centre des orifices circulaires 22 (figures 3 et 4) disposés coaxialement en vis-à-vis l'un de l'autre. Le diamètre de ces orifices circulaires 22, par exemple d'environ 6 mm, est choisi en fonction de la dimension de la cavité est en fonction des dimensions des matériaux filiformes F sur lesquels on désire effectuer les mesures, afin que ces matériaux puissent traverser librement un dispositif de protection tubulaire démontable 26 reçu dans les orifices 22.

Conformément à l'invention, une fente ouverte 24 traverse la paroi 12 selon un plan perpendiculaire à l'axe longitudinal de la cavité et situé à égale distance des court-circuits 14, de façon à déboucher dans chacun des deux orifices 22 ainsi qu'à l'extérieur de la paroi 12, sur l'une des faces de cette paroi orientée parallèlement à l'axe commun aux orifices 22. L'emplacement de la fente 24 est choisi de façon à couper le minimum de lignes de champ magnétique H ou de champ électrique $\vec{E}$, pour un dispositif fonctionnant sur le maximum de champ électrique $\vec{E}$ ou de champ magnétique $\vec{H}$, respectivement.

La fente ouverte 24 présente une largeur uniforme, par exemple d'environ 1,50 mm, choisie de façon à permettre le passage du matériau filiforme F dans le sens de sa moindre épaisseur (lorsqu'il s'agit d'une mèche de matériau composite, le matériau filiforme présente habituellement une section sensiblement rectangulaire comme l'illustrent les figures 1, 3A et 3B).

Afin d'assurer la rigidité de l'ensemble du dispositif de mesure, la face de la paroi 12 opposée à la fente 24 est renforcée par un accroissement de son épaisseur.

Conformément à une autre caractéristique essentielle de l'invention, un dispositif de protection tubulaire démontable désigné de façon générale par la référence 26 sur les figures est placé à l'intérieur des orifices circulaires 22, de façon à traverser en son centre la cavité hyperfréquence. Ce dispositif de protection 26 entoure ainsi le matériau filiforme F, sans pour autant en assurer le guidage qui est réalisé habituellement de part et d'autre de la cavité hyperfréquence par des moyens appropriés (non représentés). Le matériau filiforme F se trouve ainsi complètement isolé de l'intérieur de la cavité, de sorte que tout risque de pollution de cette dernière est évité lorsque le matériau filiforme est un matériau polluant.

Le dispositif de protection tubulaire 26 est réalisé en un matériau permettant de perturber aussi peu que possible les mesures effectuées à l'aide de la cavité hyperfréquence 10. De plus, ce matériau est choisi avantageusement afin que l'adhérence des particules ou liquides polluants y soit aussi faible que possible. Un matériau satisfaisant simultanément ces deux critères est le polytétrafluoréthylène, dont la constante diélectrique est faible (2,01) et dont les caractéristiques anti-adhésives sont connues. La silice peut également être utilisée.

A titre d'exemple, l'introduction du dispositif de protection 26 dans la cavité fait passer son facteur de qualité à vide de 10000 à 8000, ce qui est négligeable par rapport à la variation de ce facteur entre la cavité à vide et la cavité en charge avec un matériau absorbant. En outre, il est possible de corriger les écarts apportés par le dispositif de protection, au moyen d'un logiciel approprié.

Le dispositif de protection tubulaire 26 présente plus précisément la forme d'un cylindre de révolution dont le diamètre extérieur uniforme est égal au diamètre intérieur des orifices circulaires 22, de telle sorte que le dispositif peut être introduit par glissement dans ces orifices. Le diamètre intérieur du dispositif 26 est choisi quant à lui en fonction des dimensions du matériau filiforme F, de façon à éviter tout frottement de ce dernier contre la paroi du dispositif 26 sans accroître exagérément le diamètre de ce dernier.

Afin que le dispositif de protection tubulaire 26 n'empêche pas le montage et le démontage du matériau filiforme F au travers de la fente 24, ce dispositif est formé de deux parties ouvertes complémentaires 28a et 28b, comme l'illustre à plus grande échelle la figure 2. Chacune de ces parties ouvertes 28a, 28b présente la forme d'un demi-cylindre de révolution dont la longueur est de préférence légèrement supérieure à la largeur de la cavité 10 augmentée de l'épaisseur des deux faces de la paroi 12, dans le sens de l'axe commun aux deux orifices 22. Chacune des parties 28a, 28b est réalisée en une seule pièce, avantageusement obtenue par usinage à partir d'un bloc différent, de façon à réduire autant que possible le volume de matière à l'intérieur de la cavité (afin d'optimiser le système de mesure). Par exemple, pour une cavité de $1,93 \times 10^5$ mm$^3$, ce volume peut être de 350 mm$^3$ environ.

L'une des extrémités de chacune des parties ouvertes 28a, 28b du dispositif de protection 26 comporte un épaulement ou bride semi-circulaire 30a, 30b facilitant la manipulation et prévu pour être fixé sur l'une ou l'autre des deux faces de la paroi 12 dans lesquelles sont formés les orifices 22. Cette fixation est réalisée au moyen d'une vis (non représentée) ou d'un organe de fixation analogue traversant un trou 32a, 32b formé dans chacune des brides 30a, 30b.

Dans l'exemple de réalisation représenté, lorsque les deux parties ouvertes 28a, 28b du dispositif de protection 26 sont appliquées l'une contre l'autre, les deux trous 32a, 32b se trouvent en des emplacements diamétralement opposés par rapport à l'axe du cylindre de révolution ainsi formé. Cependant, ces trous 32a, 32b sont décalés par rapport à un plan de symétrie de chacune des parties ouvertes 28a, 28b. Lorsque les trous 32a, 32b se trouvent en face de trous taraudés 33 (figures 3A et 3B) formés dans la face correspondante de la paroi 12 de la cavité, le plan de joint des deux parties ouvertes 28a, 28b est orienté parallèlement aux deux autres faces de la paroi 12.

Dans un premier mode de réalisation de l'invention (non représenté) appliqué à la réalisation de mesures sur un matériau filiforme sans pollution mécanique, les bords latéraux ou longitudinaux des parties ouvertes 28a, 28b qui sont appliqués les uns contre les autres pour former le dispositif de protection 16 sont des bords plans contenus dans le plan de joint passant par l'axe commun à ces deux parties ouvertes, qui sont alors parfaitement symétriques.

Dans un deuxième mode de réalisation de l'invention, illustré sur les figures, les bords latéraux ou longitudinaux 34a et 34b des deux parties ouvertes 28a et 28b du dispositif de protection 26 ont des formes complémentaires constituant des chicanes lorsque ces bords 34a et 34b sont imbriqués les uns dans les autres. Ainsi, dans l'exemple de réalisation illustré sur la figure 2, les bords latéraux 34a de la partie ouverte 28a présentent en section la forme d'un V saillant alors que les bords latéraux 34b de la deuxième partie ouverte 28b présentent en section la forme d'un V rentrant complémentaire du V saillant formé par les bords 34a.

Cette caractéristique permet d'éviter que, lorsque le matériau filiforme F est un matériau mécaniquement polluant comportant des fibrilles, celles-ci ne s'accrochent entre les bords latéraux des parties ouvertes 28a et 28b pour pénétrer à l'intérieur de la cavité. De plus, elle contribue à un bon positionnement relatif entre ces parties ouvertes.

Comme l'illustrent notamment les figures 3A et 3B, la présence de la fente 24 ainsi que la réalisation en deux parties 28a, 28b du dispositif de protection 26 permettent, conformément à l'invention, d'introduire le matériau filiforme F dans la cavité hyperfréquence 10 et de l'en extraire en un emplacement quelconque de la longueur de ce matériau, sans qu'il soit nécessaire de le couper, ni de démonter la cavité.

Ainsi, la figure 3A montre qu'avant d'introduire le matériau filiforme F, l'opérateur met en place la partie ouverte 28a située à l'opposé de la fente 24 en la faisant glisser successivement dans chacun des orifices 22 (flèche F1). Lorsque la bride 30a de cette partie 28a arrive en butée contre la face correspondante de la paroi 12, elle est fixée au moyen d'une vis traversant le trou 32a, comme on l'a décrit précédemment.

L'opérateur introduit alors le matériau filiforme F dans la cavité par un mouvement relatif entre ce matériau et la cavité, symbolisé par les flèches F2 sur la figure 3A. Lors de ce mouvement relatif, le matériau filiforme traverse la fente 24 et vient se placer sensiblement selon l'axe du demi-cylindre formé par la partie 28a mise en place précédemment. Avant cette introduction, un fourreau protecteur 35, constitué par exemple par une feuille de papier roulée, est placé autour de la partie du matériau filiforme F devant traverser la fente 24, afin d'éviter que des feuilles ne pénètrent dans la cavité. De plus, l'opérateur peut, si nécessaire, orienter manuellement le matériau filiforme F, afin que ce matériau traverse la fente 24 dans le sens de son épaisseur la plus faible.

On se trouve alors dans les conditions illustrées sur la figure 3B et la deuxième partie ouverte 28b du dispositif de protection 26 peut à son tour être introduite dans la cavité par la même face que la première partie 28a mise en place précédemment. Cette introduction est à nouveau réalisée par glissement au travers des orifices 22, les bords latéraux complémentaires 34a et 34b glissant les uns sur les autres. Cette opération est schématisée par la flèche F3 sur la figure 3B. Lorsque la bride 30b de cette deuxième partie 28b arrive en butée contre la face correspondante du boîtier 12, elle est fixée à son tour au moyen d'une vis traversant le trou 32b. Le fourreau protecteur 35, non représenté sur la figure 3B, est alors retiré par glissement selon l'axe commun au matériau filiforme F et au dispositif de protection 24.

La mesure désirée peut alors être effectuée sur le matériau filiforme F, en faisant défiler celui-ci en continu ou de manière discontinue à l'intérieur du dispositif de protection constitué par les deux parties complémentaires 28a et 28b, pratiquement sans contact avec ce dispositif. Toute pollution liquide ou solide éventuellement amenée par le matériau filiforme F est alors confinée dans le dispositif de protection et ne peut pénétrer dans la cavité.

De préférence et contrairement à ce qui est représenté sur les figures, on oriente la cavité 10 de telle sorte que l'axe commun aux orifices 22 et aux parties complémentaires 28a, 28b du dispositif de protection 26 soit sensiblement vertical. Cette caractéristique permet de minimiser les frottements entre le matériau filiforme et le dispositif de protection et d'évacuer par gravité une partie des dépôts polluants qui tendent à se déposer sur les parois intérieures du dispositif de protection.

Périodiquement, un nettoyage de ces parois intérieures peut en outre être réalisé sans arrêter les mesures, par exemple en envoyant un jet d'air à l'intérieur du dispositif de protection. En outre, une ou les deux parties de ce dispositif peuvent être démontées, de façon à être nettoyées plus complètement.

Conformément à l'invention, ce démontage de l'une au moins des deux parties du dispositif de protection consiste à effectuer son remplacement sans interruption de la mesure et sans que la barrière matérielle que constitue ce dispositif ne soit rompue à aucun moment. Cette procédure de remplacement va à présent être décrite en se référant aux figures 4A à 4C.

La figure 4A représente très schématiquement les deux parties ouvertes 28a, 28b d'un dispositif de protection 26 monté dans les orifices 22 formés en vis-à-vis dans la paroi 12 d'une cavité hyperfréquence 10. Les brides 30a, 30b de ces deux parties 28a, 28b sont fixées sur l'une des faces de la paroi 12 comportant l'un des orifices 22. Lorsqu'on désire assurer le remplacement des deux parties 28a, 28b du dispositif de protection 26, par exemple afin de les nettoyer, on démonte les vis par lesquelles les brides 30a, 30b sont fixées sur la face correspondante de la paroi 12 et on introduit par l'orifice 22 formé dans la face opposée de la paroi 12 les deux parties 28'a, 28'b d'un dispositif de remplacement 26' (flèche F4). Avantageusement, ce remplacement s'effectue dans le sens du défilement du matériau filiforme. Au cours de ce remplacement, les bords d'extrémité 36'a, 36'b de chacune de ces parties 28'a, 28'b situés à l'opposé de leurs brides 30'a, 30'b sont en appui contre les bords d'extrémité 30a, 30b des deux parties 28a, 28b à remplacer, de telle sorte que ces dernières sont repoussées par les parties 28'a, 28'b. Cependant, comme l'illustre la figure 4B, à aucun moment la protection de la cavité vis-à-vis d'éventuelles pollutions produites par le matériau filiforme F n'est interrompue.

Lorsque les brides 30'a, 30'b des deux parties de remplacement 28'a, 28'b arrivent en butée contre la face correspondante de la paroi 12, les deux parties 28a, 28b du dispositif de protection à remplacer sont totalement sorties de la cavité. Les brides 30'a, 30'b sont alors fixées de la manière décrite précédemment sur cette face de la paroi 12.

Il est important d'observer que toutes les opérations qui viennent d'être décrites en se référant aux figures 4A, 4B et 4C sont réalisées sans qu'il soit nécessaire de couper le matériau filiforme F, ni même d'en interrompre le défilement ou d'arrêter les mesures.

Comme les bords latéraux 34a, 34b des parties ouvertes 28a, 28b, les bords d'extrémité 36a, 36b situés à l'opposé des brides 30a, 30b sur chacune des parties 28a, 28b peuvent être soit des bords plans, orientés radialement par rapport à l'axe de ces parties 28a, 28b soit des bords non plans.

Dans ce dernier cas, illustré sur les figures 4A à 4C, les bords 36a, 36b des deux parties 28a, 28b du dispositif de protection 26 à remplacer sont complémentaires des bords 36'a, 36'b des deux parties 28'a, 28'b du dispositif de remplacement 26'. Lorsque les bords d'extrémité 36a, 36b et 36'a, 36'b sont en appui les uns contre les autres au moment du remplacement du dispositif 26 par le dispositif 26', les surfaces complémentaires non planes 36a, 36b et 36'a, 36'b forment des chicanes qui évitent tout passage à l'intérieur de la cavité d'une pollution mécanique éventuellement introduite par le matériau filiforme F. La protection de la cavité contre la pollution est ainsi complète, même au moment du remplacement du dispositif de protection.

Dans l'exemple de réalisation illustré sur les figures 4A à 4C, le bord d'extrémité 36a, 36b de chacune des deux parties 28a, 28b du dispositif 26 présente en section la forme d'un V saillant alors que le bord d'extrémité 36'a, 36b de chacune des deux parties 28'a, 28'b du dispositif 26' présente en section la forme d'un V rentrant complémentaire de ce V saillant. Bien entendu, lorsque les parties 28'a, 28'b du dispositif 26' seront à leur tour remplacées, on utilisera à nouveau des parties 28a, 28b dont les bords d'extrémité forment en section des V saillants.

La description qui précède fait apparaître que la cavité hyperfréquence conforme à l'invention est parfaitement adaptée à une utilisation industrielle puisque les mesures peuvent être effectuées sans qu'il soit nécessaire à aucun moment de couper le matériau filiforme en défilement. De plus, la maintenance de la cavité peut elle-même être réalisée sans interrompre les mesures et la qualité de ces dernières peut être préservée quel que soit le type de matériau filiforme sur lequel on effectue ces mesures et notamment lorsque ce matériau est polluant.

Bien entendu, l'invention n'est pas limitée au mode de réalisation qui vient d'être décrit à titre d'exemple, mais en couvre toutes les variantes.

En premier lieu, on rappellera que les caractéristiques de l'invention peuvent être transposées à des cavités hyperfréquences de toutes formes et de toutes dimensions, ces dernières caractéristiques étant déterminées de façon connue selon la nature des mesures à effectuer.

On rappellera également que la cavité hyperfréquence selon l'invention peut être utilisée pour effectuer des mesures sur un matériau filiforme de nature quelconque, que ce matériau soit polluant ou non, et indépendamment du fait que le défilement de ce matériau s'effectue en continu ou de façon discontinue. Ainsi, l'invention peut être utilisée pour mesurer des dépôts sur des fils textiles ou sur des fibres, lors de leur fabrication, ou pour effectuer des mesures et des contrôles dimensionnels d'un matériau homogène tel qu'une fibre optique.

En outre, on comprendra que la forme des parties ouvertes constituant le dispositif de protection tubulaire démontable peut être différente de celle qui a été décrite, ces deux parties pouvant notamment être dissymétriques et ne pas présenter la forme de demi-cylindres de révolution. De plus, la fixation des deux parties du dispositif de protection peut être faite d'une façon différente, sans sortir du cadre de l'invention. Par ailleurs, on a vu que les formes des bords latéraux et des bords d'extrémité de ces parties ouvertes peuvent être planes ou non selon la nature du matériau filiforme sur lequel on effectue des mesures. Enfin, le matériau constituant le dispositif de protection peut être tout matériau ayant de faibles pertes et le volume du dispositif présent dans la cavité n'est pas critique.

## Revendications

1. Cavité hyperfréquence adaptée à la mesure des caractéristiques électromagnétiques d'un matériau filiforme en défilement, comprenant une paroi (12) pourvue de deux orifices en vis-à-vis (22) permettant le passage du matériau filiforme, caractérisée par le fait que la paroi (12) est également traversée par une fente ouverte (24) débouchant dans les deux orifices et dont la largeur autorise le passage du matériau filiforme, un dispositif de protection tubulaire démontable (26) traversant la cavité entre lesdits orifices, ce dispositif de protection comprenant deux parties ouvertes (28) aptes à être juxtaposées bord à bord autour du matériau filiforme.

2. Cavité hyperfréquence selon la revendication 1, caractérisée par le fait que chacune desdites parties ouvertes (28) présente la forme d'un demi-cylindre de révolution.

3. Cavité hyperfréquence selon l'une quelconque des revendications 1 et 2, caractérisée par le fait que lesdites parties ouvertes (28) comportent des bords latéraux complémentaires (34a, 34b) en forme de chicanes, aptes à être imbriqués les uns dans les autres.

4. Cavité hyperfréquence selon l'une quelconque des revendications précédentes, caractérisée par le fait que chacune desdites parties ouvertes (28) comporte à l'une de ses extrémités une bride de fixation (30) percée d'au moins un trou (32) pour le passage d'un organe de fixation de la bride sur la paroi de la cavité.

5. Cavité hyperfréquence selon la revendication 4, caractérisée par le fait qu'à l'opposé de son extrémité portant la bride de fixation (30), chacune desdites parties ouvertes (28) comporte un bord d'extrémité (36) en forme de chicane apte à être imbriqué dans un bord d'extrémité complémentaire (36′) d'une partie ouverte de remplacement (28′), introduite par glissement dans ladite cavité.

6. Cavité hyperfréquence selon l'une quelconque des revendications précédentes, caractérisée par le fait que la fente ouverte (24) est située dans un plan perpendiculaire à un axe longitudinal de la cavité, à égale distance des extrémités de cette dernière.

7. Cavité hyperfréquence selon l'une quelconque des revendications précédentes, caractérisée par le fait que l'axe commun auxdits orifices (22) est sensiblement vertical.

FIG. 1

FIG. 2

FIG. 3 A

FIG. 3 B

FIG. 4A

FIG. 4B

FIG. 4C

Office européen
des brevets

**RAPPORT DE RECHERCHE EUROPEENNE**

Numero de la demande

EP 91 40 1069

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X,P | EP-A-0 372 992 (E.I. DU PONT DE NEMOURS AND COMPANY) * colonne 8, lignes 3-12; figure 9 * | 1 | G 01 N 22/00 |
| A,D | FR-A-2 386 033 (BAYER AG) * page 3, lignes 16-22 * | 1 | |
| A | EP-A-0 302 778 (AEROSPATIALE) * figure 3 *; & FR-A-2619217 (cat. D) | 1 | |
| A | PATENT ABSTRACTS OF JAPAN vol. 12, no. 408 (P-778)(3255), 28 octobre 1988; & JP - A - 63145951 (DAIPOOLE K.K.) 18.06.1988 | 1 | |
| A | FR-A-2 556 470 (UNIVERSITE DE BORDEAUX I.) * page 9, lignes 1-11 * | 1 | |

DOMAINES TECHNIQUES RECHERCHES (Int. Cl.5)

G 01 N
H 01 P

Le présent rapport a été établi pour toutes les revendications

| Lieu de la recherche | Date d'achèvement de la recherche | Examinateur |
|---|---|---|
| BERLIN | 31-07-1991 | BRISON O.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................
& : membre de la même famille, document correspondant

EPO FORM 1503 03.82 (P0402)